# EUROPEAN PATENT SPECIFICATION

(11) **EP 1 253 335 B1**
(45) Date of publication and mention of the grant of the patent: **29.06.2005**
(21) Application number: 02445050.4
(22) Date of filing: 22.04.2002
(51) Int. Cl.: F16D 1/09

(54) **Attachment means for arresting a machine member on a shaft**
Befestigungmittel zum Verbinden von einem Maschinenteil mit einer Welle
Moyen de fixation pour fixer un élément de machine sur un arbre

(30) Priority: 23.04.2001 SE 0101444
(43) Date of publication of application: 30.10.2002
(73) Proprietor: Aktiebolaget SKF, 415 50 Göteborg (SE)
(72) Inventor: Östling, Sture, 641 25 Katrineholm (SE); Axelsson, Uno, 641 35 Katrineholm (SE)
(74) Representative: Westman, Per Börje Ingemar

(56) References cited:
- EP-A- 1 052 420
- DE-U- 8 514 085
- PATENT ABSTRACTS OF JAPAN vol. 010, no. 070 (M-462), 19 March 1986 (1986-03-19) & JP 60 215120 A (HIROYASU SHIOKAWA), 28 October 1985 (1985-10-28)

## Description

The present invention refers to a machine member comprising an attachment means arresting the machine member, such as a pulley, a sheave, a sprocket or the like on a shaft in accordance with the preamble of the accompanying claim 1.

Mounting of sheaves or sprockets on a cylindrical shaft, in such a manner that the sheave or the like will be arrested against circumferential and/or axial movements relative to the shaft, can be effected in different manners. Thus it is common to use a keyway in the shaft and/or in the boss or hub of the machine member, and a key inserted in said keyway for preventing relative circumferential movement. However, such arresting requires a more expensive machining of the keyway in the shaft, it reduces the strength of the shaft and it furthermore can hardly be used together with light and inexpensive hollow shafts.

Similar limitations can be seen with use of thread joints, as this requires thread cutting of shaft and inner surface of the bore in the machine member.

Cylindrical shaft and hub joints of course can also be obtained with press fit, effected with or without use of pressure oil arrangement, but also in this case it is difficult to use hollow shafts, due to large radially inward forces.

In the patent document EP 1052420 an attachment means is disclosed intended for arresting a machine member having a substantially cylindrical bore on a cylindrical shaft, wherein the bore has a larger inner diameter than the outer diameter of the shaft, resulting in an annular space between said machine member and the shaft, in which space is inserted a pair of elements having mating, co-operating taper surfaces facing each other, said elements being intended at mutual displacement to change their overall radial size, thereby increasing or reducing a clamping force between the machine member and the shaft, whereby the elements is a first thin-walled sleeve member having a smooth inner surface arranged to enclose a portion of the shaft, and a second, thin-walled sleeve member having a smooth outer surface arranged to engage the bore of the machine member, said second sleeve member enclosing the first sleeve member, and the first and second sleeve members in their surfaces facing each other have a plurality of saw-tooth-shaped consecutive axially tapering sections, that the second sleeve member with one of its end edges abuts against a stop provided in the machine member, and which first sleeve member projects outside the opposite end edge of the second sleeve member, for being readily accessible for an external pushing force causing such mutual displacement between the first and second sleeve members.

Such an attachment means would function very well, but a drawback is that it is required, that the size relation between shaft and bore of the sheave is very important for allowing that a proper attachment shall be obtained. This makes it necessary to provide a substantial number of different sizes of the sleeve members.

The purpose of the present invention is to propose an attachment means of the type described, which has been improved in order to eliminate the drawback mentioned above, and to be useful for a wide variety of sheave bore diameters with only a few different sizes, and this has been achieved in that the device has been given the features defined in the accompanying claims.

Hereinafter, the invention will be further described and elucidated by way of non-limiting embodiments shown in the accompanying drawings.
Fig. 1 shows in cross section a machine member arrested to a shaft by means of prior art attachment means.
Fig. 2 is a corresponding view showing a portion of a sheave attached to a shaft by means of an attachment device in accordance with the present invention.
Fig. 3 shows a view similar to Fig. 2 but illustrating a second embodiment of the attachment device according to the present invention, and
Fig. 4 is a view corresponding to Fig. 3 and showing an attachment device of a somewhat more compact design.

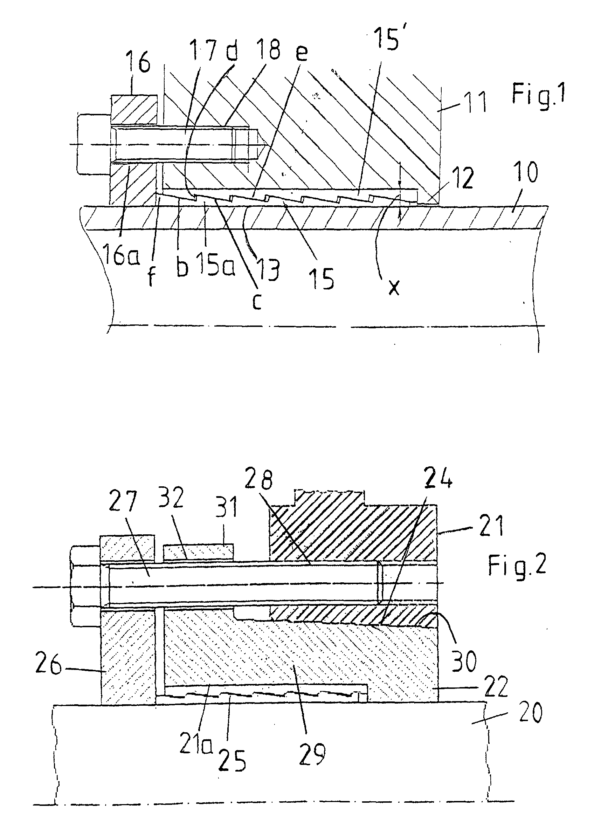

Fig. 1 shows a prior art attachment device in accordance with the above mentioned document EP 1052420. In this prior art embodiment is shown in cross section a portion of a hollow shaft 10 to which has been secured a machine member 11, shown only partially, and which for instance can be a sheave. As shown, the hollow shaft 10 has a cylindrical external envelope surface, and the machine member 11 has an inner bore of cylindrical shape and a diameter exceeding the outer diameter of the shaft. At one axial side of the bore in the machine member 11, there is however a shoulder 12 having only a slightly bigger diameter than the shaft, thereby leaving such a clearance only, that the machine member can be easily pushed up the shaft 10 to a desired arresting position. The annular space 13 formed between the inner surface of the bore in the machine member 11 and the outer envelope surface of the shaft 10, has a certain radial dimension x. In this space is inserted the primary part of the attachment means according to the invention, i.e. the two-piece sleeve 15.

This two-piece sleeve comprises a first or inner sleeve 15a having a cylindrical inner surface and an external surface provided with a continuous axial series of tapering, substantially saw-tooth-shaped surface elements, where a first surface element b tapers from a bigger diameter to a smaller diameter, followed by a consecutive surface element c, connected to the first element b, via a substantially radial wall member d thus that the end of element c adjacent the narrower end of section b has substantially the same outer diameter as that of element b at its biggest end, i.e. the end remote from the second section c. The second section c is related to and connected to the consecutive section e, etcetera, in the same manner as the relation between the first and second sections b and c. The second or outer piece 15' of the two-piece sleeve is designed as a reverse image of the first, inner sleeve piece 15a and has a cylindrical outer envelope surface, whereas its inner surface is provided with saw-tooth-shaped surface elements being complementary to those of the first sleeve piece 15a. The outer sleeve member 15' is arranged to enclose the inner sleeve 15a, with a short section f of the inner sleeve 15a projecting axially out from the interior of the second, outer sleeve 15'.

The prior art attachment means also incorporates a ring member 16 arranged around the shaft 10 on the side of the machine member 11 facing away from its shoulder 12. This ring member 16 is provided with a number of axial through-holes 16a, each one receiving a bolt 17 projecting through the through-hole 16a and being screwed into corresponding threaded bores 18 in the machine member 11. This ring member 16 abuts the projecting sleeve portion f of the inner sleeve 15a, and by tightening the bolt(s) 17, it is possible to make the inner sleeve 15a move axially relative to the outer sleeve 15', thereby causing the co-operating tapering surfaces of the inner and the outer sleeves 15a, 15' resp. to slide against each other, thereby first reaching the radial measure x of the space 13, and thereupon at continued tightening of the bolts, increasing the grip between the attachment means and the shaft 10 and between the attachment means and the interior of the machine member 11, until a firm grip is obtained in circumferential as well as in axial direction.
By the fact that the consecutive saw-tooth-shaped taper portions are made in an integral unit it is also achieved that the attachment means is centred in its seat without risks for misalignment, and furthermore the handling and stock-keeping of the attachment means is simplified.

The prior art attachment means as described and illustrated in Fig. 1 gives a very good and reliable attachment result, but the arresting of sheaves or the like of a lot of various bore diameters requires stock-keeping of a large variety of sizes of the attachment means or separate manufacture for different relations between bore and shaft diameter.

In Fig. 2 is shown in a view corresponding to that of the prior art embodiment according to Fig. 1, a first embodiment of the attachment means according to the present invention. As can be seen in this embodiment, the system also here incorporates a shaft 20, a machine member or a sheave 21 (only a portion of which is shown), a ring member 26 arranged around the shaft 20, and a number of bolts 27 extending through bores in the ring member and being screwed into threaded bores 28 in the sheave 21.
Around the shaft 20 is also provided an two-part sleeve 25 of the same form and function as the two-part sleeve 15 in the prior art embodiment according to Fig. 1.

However, the machine member comprising an attachment means according to the invention differs from the prior art embodiment in that the bore 24 of the sheave 21 is tapering and not cylindrical as the bore in he prior art embodiment. A second, intermediary ring member 29 having an external tapering envelope surface 30, is provided with a cylindrical inner surface 21a, which together with the envelope surface of the shaft 20 defines a space in which the two-part sleeve member 25 is positioned. At one of its axial ends, the intermediary ring member 29 has an inwardly projecting flange 22, and this flange 22 has a diameter substantially corresponding to that of the shaft 20, in order to allow the intermediary ring member 29 to be easily positioned around the shaft 20. In this specific embodiment the intermediary ring member 29 at one axial end is provided with a radially outwardly projecting flange member 31, which is provided with axially extending bores 32 arranged to correspond to the positions of the bores in the first ring member 26 and the bores 28 in the sheave 21, and to be easily rotated in order to align with these bores.

The effect of the two-part sleeve member 25 will be the same as that of the sleeve member 15 in the prior art embodiment, i.e. when the intermediary ring member 29 is exerted to a substantially axial force to the left in the drawing figure, the outer sleeve member of the two-part sleeve 25 will be pushed to the left by being contacted by the adjacent shoulder formed by the inwardly extending flange 22 on the intermediary ring member 29. However the inner sleeve of the two-part sleeve 25, will abut the first ring member 26 and the outer sleeve member therefore will move up over the inner sleeve member, thereby increasing the total radial size of the pair of sleeve members, thereby also increasing the grip of the two-part sleeve 25 against the shaft, and against the intermediary ring member 29, thereby increasing the force arresting the intermediary ring 29 on the shaft 20.

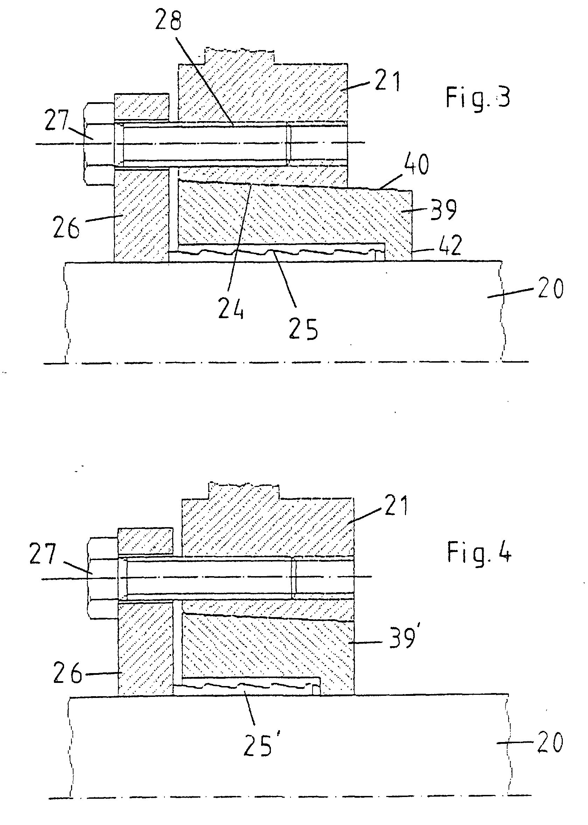

Figs. 3 and 4 show in views corresponding to Fig. 2 embodiments of the machine member comprising an attachment means according to the invention, which slightly differ from that according to Fig. 2. Components being identical or similar in the different embodiments have been given the same reference numerals, whereas components of different design have been given new reference numbers.

In Fig. 3 thus is shown a shaft 20 to which is attached an annular machine member, such as a sheave 21. A two-part sleeve 25 and a first ring member 26 are arranged about the shaft 20. A number of bolts 27 are inserted through bores in the first ring member and are in threadingly connection with corresponding threaded bores 28 in the sheave 21. The sheave 21 has a tapering bore 24 and between the two-part sleeve 25 and the bore 24 of the sheave is positioned an intermediary ring 39, which has a tapering outer envelope surface 40 corresponding to the tapering bore 24 of the sheave. This intermediary ring 39 has an inwardly projecting flange 42, closely encircling the periphery of the shaft, and thereby also forming an annular shoulder acting on the outer half of the two-part sleeve 25 when exerted to an axial force, in the same manner as described in connection with the prior art embodiment according to Fig. 1.
The main difference as compared to the intermediary ring 29 of the Fig. 2 embodiment according to the invention is that the intermediary ring 39 has no outwardly extending flange resembling to the flange 31 in the embodiment according to Fig. 2. The bolts 27 in this case extend directly from the bores in the first ring member 26 and enter into the threaded bores 28 in the sheave 21. The function and the effect of the attachment means illustrated in this drawing figure are the same as those in the embodiments according to Fig. 2.

In Fig. 4 finally is shown another embodiment of the present invention which is similar to the embodiment according to Fig. 3, but which has a two-part sleeve 25' of substantially shorter axial size than the corresponding detail in Fig. 3. Therefore it is also possible to use an intermediary ring 39' of substantially sorter axial size. Such a shorter design of the attachment means can preferably be used when the forces to be transferred between shaft and sheave are rather small.

In the embodiments according to Figs. 3 and 4 the bolts 27 have no intermediate guiding via bores in a flange extending outwardly from the intermediary ring 39, 39' but for most applications such intermediate guidance is not necessary.

The components forming part of the machine member comprising an attachment means according to the invention can be temporarily interconnected and held together as a unit after manufacture and can be delivered to the place of us as a single unit, which when assembled is pushed up on the shaft to the desired position, whereupon the bolts are tightened until the grip between the different co-operating surfaces is the desired. A further advantage is that bolts and tapering portions of standard type can be used.

The invention is not limited to the embodiments shown in the drawings and described in connection thereto, but modifications and variants are possible within the scope of the appended claims.

## Claims

1. A machine member comprising an attachment means arresting the machine member (21) having a bore (24) on a cylindrical shaft (20), wherein the bore is bigger than the shaft diameter, resulting in an annular space between said machine member and the shaft, which space, in use, encloses means of the attachment means for providing a clamping force between the machine member and the shaft, said means incorporating a two-part thin-walled sleeve (25) having mating, co-operating taper surfaces facing each other, and intended at mutual displacement to change the overall radial size of the sleeve, which two parts of the sleeve (25) are sleeve members, the taper surfaces having saw-tooth-shaped consecutive axially tapering sections in the envelope surfaces facing each other, a first ring member (26) of the attachment means fitted, in use, about the shaft (20) and forming a stop for a first one of said sleeve members, said first ring member also supporting means (27) of the attachment means adapted, in use, to cause the machine member (21) movement along the shaft (20), thereby causing said mutual displacement of the sleeve members of the two-part sleeve (25),
**characterized therein,**
that an intermediary ring member (29, 39, 39') of the attachment means is positioned between the two-part sleeve (25) and the machine member (21), the bore of the machine member being a tapering bore (24), the intermediary ring member (29, 39, 39') having an outer envelope surface (30, 40) of a corresponding taper, and an inwardly projecting flange (22, 42) located at the axial side of the intermediary ring member facing away from the first ring member, said flange (22, 42) forming an abutment for a second one of the said sleeve members, thereby transferring an axial displacement of the machine member into the mutual displacement of the sleeve members of the two-part sleeve (25).

2. A machine member comprising an attachment means as claimed in claim 1,
**characterized therein,**
that the means (27) for causing the machine member (21) movement along the shaft (20) are bolts inserted in through-holes in the first ring member (26), and arranged to co-operate with threaded bores (28) in the machine member.

3. A machine member comprising an attachment means as claimed in claim 2,
**characterized therein,**
that the intermediary ring member (29) has a outwardly projecting flange (31) having through-bores (32) for guiding the bolts (27) between the first ring member (26) and the threaded bores (28) in the machine member.

4. A machine member comprising an attachment means as claimed in claim 3,
**characterized therein,**
that the outwardly projecting flange (31) of the intermediary ring (29) is positioned at the axial side of the intermediary ring opposed to the inwardly projecting flange (22).

5. A machine member comprising an attachment means as claimed in anyone of the preceeding claims,
**characterized therein,**
that the machine member is a sheave, a pulley, a sprocket (21) or the like.

## Patentansprüche

1. Maschinenelement mit einer dieses verriegelnden Befestigungsvorrichtung, das eine Bohrung (24) um eine zylindrische Welle (20) aufweist, wobei die Bohrung größer als der Wellendurchmesser ist, was zwischen dem Maschinenelement und der Welle zu einem ringförmigen Raum führt, der Mittel der Befestigungsvorrichtung zum Erzeugen einer Klemmkraft zwischen dem Maschinenelement und der Welle einschließt, die eine zweiteilige, dünnwandige Hülse (25) umfassen, die passende, zusammenwirkende Schrägflächen aufweist, die einander zugewandt sind und bei Verlagerung zueinander dazu gedacht sind, die radiale Gesamthöhe der Hülse zu verändern, wobei die zwei Teile der Hülse (25) Hülsenelemente sind, die sägezahnförmige, axial aufeinanderfolgende Schrägflächen an den Hüllflächen aufweisen, die einander zugewandt sind, und ein erstes Ringelement (26) der Befestigungsvorrichtung im Einsatz auf der Welle (20) sitzt, einen Anschlag für ein erstes der Hülsenelemente bildet und ferner Mittel (26) der Befestigungsvorrichtung zum Bewirken einer Bewegung des Maschinenelements (21) entlang der Welle abstützt, wodurch es die Verlagerung der Hülsenelemente der zweiteiligen Hülse (25) zueinander verursacht, **dadurch gekennzeichnet, daß** ein Zwischenring (29, 39, 39') der Befestigungsvorrichtung zwischen der zweiteiligen Hülse (25) und dem Maschinenelement (21) angeordnet ist, wobei die Bohrung des Maschinenelements eine Kegelbohrung (24) ist, der Zwischenring (29, 39, 39') eine äußere Hüllfläche mit entsprechender Kegelform besitzt und das Ringelement einen nach innen weisenden Flansch (22, 42) aufweist, der an der Stirnseite des Zwischenrings von dem ersten Ringelement abgewandt angeordnet ist, wobei der Flansch (22, 42) eine Anlage für das zweite der Hülsenelemente bildet und **dadurch** eine Axialverlagerung des Maschinenelements in die Verlagerung der Hülsenelemente der zweiteiligen Hülse (25) zueinander überträgt.

2. Maschinenelement mit einer Befestigungsvorrichtung nach Anspruch 1, **dadurch gekennzeichnet, daß** die Mittel (27) zum Bewirken einer Bewegung des Maschinenelements (21) entlang der Welle (20) Bolzen sind, die in Durchgangsbohrungen in dem ersten Ringelement (26) eingefügt sind und zum Zusammenwirken mit Gewindebohrungen (28) in dem Maschinenelement vorgesehen sind.

3. Maschinenelement mit einer Befestigungsvorrichtung nach Anspruch 2, **dadurch gekennzeichnet, daß** der Zwischenring (29) einen nach außen weisenden Flansch (31) aufweist, der Durchgangsbohrungen (32) zum Führen der Bolzen (27) zwischen dem ersten Ringelement (26) und den Gewindebohrungen (28) in dem Maschinenelement aufweist.

4. Maschinenelement mit einer Befestigungsvorrichtung nach Anspruch 3, **dadurch gekennzeichnet, daß** der nach außen weisende Flansch (31) des Zwischenrings (29) an der Stirnseite des Zwischenrings liegt, die dem nach innen weisenden Flansch (22) entgegengesetzt liegt.

5. Maschinenelement mit einer Befestigungsvorrichtung nach einem der vorhergehenden Ansprüche, **dadurch gekennzeichnet, daß** das Maschinenelement eine Riemenscheibe, eine Rolle, ein Stirnrad (21) oder dergleichen ist.

## Revendications

1. Elément de machine comprenant un moyen de fixation qui arrête l'élément de machine (21) comportant un trou (24) sur un axe cylindrique (20), dans lequel le trou est plus gros que le diamètre de l'axe, ce qui donne un espace annulaire entre ledit élément de machine et l'axe, lequel espace, en utilisation, renferme un moyen du moyen de fixation servant à fournir une force de serrage entre l'élément de machine et l'axe, ledit moyen comportant un manchon à paroi mince en deux parties (25) ayant des surfaces inclinées complémentaires, coopérantes et se faisant face, et destinées à un déplacement mutuel pour modifier la taille radiale hors tout du manchon, lesquelles deux parties du manchon (25) sont des éléments de manchon, les surfaces inclinées ayant des sections axialement coniques et consécutives en dents de scie dans les surfaces d'enveloppe se faisant face, un premier élément annulaire (26) du moyen de fixation, en utilisation, autour de l'axe (20) et formant une butée pour un premier desdits éléments de manchon, ledit premier élément annulaire supportant aussi un moyen (27) du moyen de fixation, adapté, en utilisation, pour provoquer le mouvement de l'élément de machine (21) le long de l'axe (20), provoquant ainsi ledit déplacement mutuel des éléments de manchon du manchon en deux parties (25),
**caractérisé en ce qu'**un élément annulaire intermédiaire (29, 39, 39') du moyen de fixation est positionné entre le manchon en deux parties (25) et l'élément de machine (21), le trou de l'élément de machine étant un trou conique (24), l'élément annulaire intermédiaire (29, 39, 39') ayant une surface d'enveloppe extérieure (30, 40) d'un rétrécissement correspondant, et un rebord faisant saillie vers l'intérieur (22, 42) situé sur le côté axial de l'élément annulaire intermédiaire qui tourne le dos au premier élément annulaire, ledit rebord (22, 42) formant une butée pour un deuxième desdits éléments de manchon, transférant ainsi un déplacement axial de l'élément de machine en le déplacement mutuel des éléments de manchon du manchon en deux parties (25).

2. Elément de machine comprenant un moyen de fixation selon la revendication 1, **caractérisé en ce que** le moyen (27) servant à provoquer le mouvement de l'élément de machine (21) le long de l'axe (20) est constitué de boulons insérés dans des trous traversants réalisés dans le premier élément annulaire (26), et adaptés pour coopérer avec des trous filetés (28) prévus dans l'élément de machine.

3. Elément de machine comprenant un moyen de fixation selon la revendication 2, **caractérisé en ce que** l'élément annulaire intermédiaire (29) a un rebord faisant saillie vers l'extérieur (31) ayant des trous traversants (32) pour guider les boulons (27) entre le premier élément annulaire (26) et les trous filetés (28) dans l'élément de machine.

4. Elément de machine comprenant un moyen de fixation selon la revendication 3, **caractérisé en ce que** le rebord faisant saillie vers l'extérieur (31) de l'anneau intermédiaire (29) est positionné du côté axial de l'anneau intermédiaire opposé au rebord faisant saillie vers l'intérieur (22).

5. Elément de machine comprenant un moyen de fixation selon l'une quelconque des revendications précédentes, **caractérisé en ce que** l'élément de machine est un galet, une poulie, une roue dentée (21) ou élément similaire.
